# EUROPEAN PATENT SPECIFICATION

(11) **EP 1 015 243 B1**
(45) Date of publication and mention of the grant of the patent: **27.02.2002**
(21) Application number: 98944808.9
(22) Date of filing: 08.09.1998
(51) Int. Cl.: B32B 27/34, B65D 65/40

(54) **PACKAGING MATERIAL**
VERPACKUNGSMATERIAL
MATIERE D'EMBALLAGE

(30) Priority: 08.09.1997 EP 97202750
(43) Date of publication of application: 05.07.2000
(73) Proprietor: E.I. DU PONT DE NEMOURS AND COMPANY, Wilmington Delaware 19898 (US)
(72) Inventor: TROUILHET, Yves, CH-1222 Vésenaz (CH)
(74) Representative: Jones, Alan John
(86) International application number: US9818731
(87) International publication number: WO9912735

(56) References cited:
- EP-A- 0 520 767
- EP-A- 0 687 557
- DE-A- 4 026 040
- US-A- 4 551 366

## Description

The present invention relates to packaging for food products that are sensitive to oxidation, including dairy products such as cheese, butter and margarine.

### Background of the invention

Various materials for providing oxygen barriers for products sensitive to oxidation are known, including ethylene vinyl alcohol (EVOH), amorphous nylon, semicrystalline polyamide 6 and polyacrylonitrile.

For packaging liquid or semi-liquid materials that are sensitive to oxidation, water barrier properties are also needed. C.f. EP 0241 819, which discloses a laminate using nylon as a barrier; EP 0293 098, which discloses a multilayer structure with EVOH and low density polyethylene (LDPE) coated on board. More recently, EP 0520 767 discloses the use of amorphous nylon as a non-foil composite laminate. In all of these cases, water vapor transmission is below 10 g/m²d due to a relatively thick polyethylene seal layer.

US 4 551 366 relates to a flexible layered composite vessel for food preservation with low oxygen permeability. The inner member is composed of a blend of ethylene-vinyl alcohol copolymer and a copolyamide.

In soft cheese packaging the right balance of an oxygen barrier and a moisture barrier is given by a cellulosic film laminate to paper. In this case, the water vapor transmission is between 400 and 630 g/m²d at 38 °C and 90% relative humidity (RH), while the oxygen permeability is below 10 cc/m²d atm.

### Summary of the invention

The present invention provides a flexible or semi-flexible packaging material with an oxygen barrier between 10 and 100 cc/m²d atm and a water vapor barrier between 100 and 1000 g/m²d at 38°C and 90% relative humidity comprising (a) a layer of paper having a weight between 20 and 400 g/m², (b) a layer of ethylene copolymer or grafted ethylene copolymer having a weight between 1 and 5 g/m² adjacent to layer (a), and (c) a layer of nylon comprising between 5 and 100 weight % of amorphous nylon and 0 and 95 weight % semicrystalline polyamide 6 having a weight between 10 and 30 g/m² adjacent to layer (b). This packaging material is particularly useful for packaging dairy products, such as cheese, butter and margarine.

The packaging material may be made by means known in the art such as by coextrusion coating or lamination of coextruded film onto paper.

### Detailed description of the invention

As used herein, the following terms have the meanings given below.

'Flexible packaging material' means packaging sheet material suitable for wrapping goods, e.g. the aforementioned dairy products. 'Semi-flexible packaging material' means packaging material having a somewhat higher resistance to flex, typically having a board (e.g. cardboard) as paper layer (a). Semi-flexible packaging material may be thermoformed, as known in the art, to form desired shapes, such as trays.

'Oxygen barrier' measures the rate at which oxygen passes through the packaging material of the present invention, and is between 10 and 100 cc/m²d atm measured according to ASTM D 3985.

'Water vapor barrier' measures the rate at which water vapor passes through the packaging material of the present invention, and is between 100 and 1000 g/m²d at 38°C and 90% relative humidity.

Paper layer (a) can be any type of paper typically used in the packaging industry, flexible or semi-flexible, and having a weight between 20 and 400 g/m². This weight governs the degree of flexibility of the paper. Paper, being a very porous material, does not control the oxygen or water vapor barrier properties of the packaging material of the present invention.

The ethylene copolymer of layer (b) can be ethylene vinyl acetate, ethylene-ethyl acrylate, ethylene-methyl acrylate or ethylene butyl acrylate, an ethylene-acid copolymer or its corresponding ionomer.

The ethylene-acid copolymers are copolymers of ethylene and α,β-ethylenically-unsaturated C₃-C₈ carboxylic acid have the acid moiety present in an amount of 1 to about 25, (preferably 6 to 9) wt. % of the copolymer. The preferred acid moieties are methacrylic acid and acrylic acid.

The ethylene-acid copolymers can also be E/X/Y copolymers where E is ethylene; X is a softening comonomer and Y is the α,β-ethylenically-unsaturated C₃-C₈ carboxylic acid, particularly acrylic or methycrylic acid. By "softening", it is meant that the polymer is made less crystalline. Suitable "softening comonomers (X) are monomers selected from alkyl acrylate, and alkyl methacrylate, wherein the alkyl groups have from 1 - 12 carbon atoms which, when present, may be up to 25 (preferably up to 15, most preferably up to 10) wt. % of the ethylene-acid copolymer.

Specific ethylene-acid copolymers include ethylene/acrylic acid, ethylene/methacrylic acid, ethylene/acrylic acid/n-butyl acrylate, ethylene/methacrylic acid/n-butyl acrylate, ethylene/methacrylic acid/iso-butyl acrylate, ethylene/acrylic acid/iso-butyl acrylate, ethylene/methacrylic acid/n-butyl methacrylate, ethylene/acriylic acid/methyl methacrylate, ethylene/acrylic acid/methyl acrylate, ethylene/methacrylic acid/methyl acrylate, ethylene/methacrylic acid/methyl methacrylate, and ethylene/acrylic acid/n-butyl methacrylate.

Corresponding ionomers of the ethylene-acid copolymers are formed by partially neutralizing the acid moiety. The acid moiety is partially neutralized with monovalent and/or bivalent metal cations such as lithium, sodium*, potassium, magnesium, calcium, barium, lead, tin, zinc* or aluminum (*= preferred), or a combination of such cations. The mole percent of acid neutralized is up to about 70 %, preferably 30 to 50 %.

Ionomers can be made by processes well known in the art (cf. U.S. Pat. No. 3,262,272 to Rees, for example).

The graft of the ethylene copolymer will be maleic anhydride, typically in an amount between 0.1 and 3 weight %. Grafting can be carried out using techniques known in the art.

Optionally, layer (b) may further comprise up to 40 weight % of a copolyether ester, a copolyether amide or a polyurethane thermoplastic. Suitable copolyether esters are available under the name Hytrel® from the DuPont Company; suitable copolyether amides are available under the name Pebax® from Elf Atochem.

Layer (b) will be applied to paper layer (a) at a weight between 1 and 5 g/m² to assure the desired oxygen and water vapor barrier levels of the present invention are met. Suitable ethylene copolymers for use in layer (b) are the Bynel® and Surlyn® families of resins, both available from the DuPont Company.

Nylon layer (c) can contain pure amorphous nylon or can be a blend of between 5 and 100 weight % of amorphous nylon and 0 and 95 weight % semicrystalline polyamide 6.

The term "amorphous polyamide" is well known to those skilled in the art. "Amorphous polyamide", as used herein, refers to those polyamides which are lacking in crystallinity as shown by the lack of an endotherm crystalline melting peak in a Differential Scanning Calorimeter ("DSC") measurement (ASTM D-3417), 10 °C/minute.

Examples of the amorphous polyamides that can be used include those amorphous polymers prepared from the following diamines: Hexamethylenediamine, 2-methylpentamethylenediamine, 2,2,4-trimethylhexamethylenediamine, 2,4,4-trimethylhexamethylenediamine, bis-(4-aminocyclohexyl)methane, 2,2-bis(4-aminocyclohexyl)isopropylidine, 1,4-diaminocyclohexane, 1,3-diaminocyclohexane, meta-xylylenediamine, 1,5-diaminopentane, 1,4-diaminobutane, 1,3-diaminopropane, 2-ethyldiaminobutane, 1,4-diaminomethylcyclohexane, p-xylylenediamine, m-phenylenediamine, p-phenylenediamine, and alkyl substituted m-pehnylenediamine and p-phenylenediamine.

Examples of polyamides that can be used include those amorphous polymers prepared from the following diacarboxylic acids: isophthalic acid, terephthalic acid, alkyl substituted iso- and terephthalic acid, adipic acid, sebacic acid, butane dicarboxylic acid, and the like.

Specific examples of amorphous polyamides which are suitable for this invention include: hexamethylenediamine isophthalamide, hexamethylenediamine isophthalamide/terephthalamide, copolymers of hexamethylene diamine and 2-methylpentamethylenediame with iso-or terephthalic acids, or mixtures of these acids. Polyamides based on hexamethylenediamine iso/terephthalamide containing high levels of terephthalic acid moiety may also be useful provided a second diamine such as 2-methyldiaminopentane is incorporated to produce a processible amorphous polymer.

The above amorphous polyamides may contain as comonomers minor amounts of lactam species such as caprolactam or lauryl lactam, even though polymers based on these monomers alone are not amorphous. The important feature is that the polyamide as a whole must be amorphous. Thus small amounts of these comonomers may be incorporated as long as they do not impart crystallinity to the polyamide. In addition, up to about 10 weight % of a liquid or solid plasticizer such as glycerol, sorbital, mannitol, or aromatic sulfonamide compounds (such as Santicizer 8® from Monsanto) may be included with the amorphous polyamide.

A suitable amorphous polyamide for use in the present invention is available from the DuPont Company under the tradename SELAR®PA.

The term "semicrystalline polyamide 6" is well known to those skilled in the art. Semicrystalline polyamide 6 suitable for this invention are generally prepared from lactams or amino acids or from condensation of diamines such as hexamethylene diamine with dibasic acids such as sebacic acid. Copolymers and terpolymers of these polyamides are also included. A suitable semicrystalline polyamide 6 for use in the present invention is Durethan® B29, available from Bayer.

Layer (c) will be applied to paper layer (b) at a weight between 10 and 30 g/m² to assure the desired oxygen and water vapor barrier levels of the present invention are met.

This packaging material is particularly useful for packaging dairy products, such as cheese, butter and margarine. It will be typically be produced by coextrusion coating of layers (b) and (c) onto layer (a), or by lamination of extruded or coextruded layers (b) and (c) onto layer (a). Optionally, the so prepared packaging material can be subsequently thermoformed into a desired shape, such as a tray.

### Example 1

Layer (b) of Bynel® 21E533 (an anhydride modified ethylene acrylate resin from DuPont) is coextruded with layer (c) of various blend of Selar® PA 3426 (an amorphous nylon from DuPont) and Durethan® B29 (a semicrystalline polyamide 6 from Bayer) and coated on paper.

The nylon blend is introduced into a 3.5" extruder with barrel temperatures set at 240, 280, 280, 280 and 280 °C. The Bynel® 21E533 is introduced in 2.5" extruder with barrel temperatures set at 180, 220, 250, 270, 280 °C. Feed bloc and die temperatures are set at 280°C.

The 800 mm wide die is 150 mm (air gap) above the nip where it coats the paper. The paper is corona treated and run at the line speed of 200 m/min. The final so produced structure is:

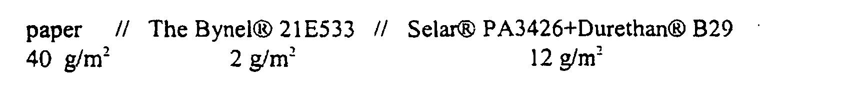

The following water transmission (38°C, 90% RH) and oxygen permeability (room temperature) is measured (% given by weight):

| Example | | water g/ m²d | oxygen cc/ m²d atm |
|---|---|---|---|
| 1.1 | 80% Selar® PA3426 + 20% Durethan® B29 | 400 | 32 |
| 1.2 | 50% " + 50% " | 500 | 35 |
| 1.3 | 20% " + 80% " | 800 | 43 |

The last two structures are particularly well suited for soft cheese packaging.

### Example 2

Example 1 is repeated except that Surlyn® AD2 is substituted for Bynel® 21E533.

Surlyn® AD2 (2 g/m²) is coextruded with the blend 80 weight % Selar® PA3426 + 20 weight % Durethan® B29 (12 g/m²). The oxygen permeability is the same as in Example 1.1. Water permeability lowers to 250 g/m²d.

This structure when extruded on a glossy chill-roll has a very glossy appearance. Together with the dead-foil, it can be used for candy and butter wrapping.

### Example 3

Example 2 is repeated except that the paper layer is replaced with board having a weight of 200 g/m². The board can be thermoformed to produce trays or lidding.

### Example 4

Example 1 is repeated except that the 70 wt. % Bynel® 21E533 and 30 wt % Hytrel® 3548 is substituted for Bynel® 21E533.

## Claims

1. A flexible or semi-flexible packaging material with an oxygen barrier between 10 and 100 cc/m²d atm and a water vapor barrier between 100 and 1000 g/m²d at 38°C and 90% relative humidity comprising
(a) a layer of paper having a weight between 20 and 400 g/m²
(b) a layer of ethylene copolymer or grafted ethylene copolymer having a weight between 1 and 5 g/m² adjacent to layer (a), and
(c) a layer of nylon comprising between 5 and 100 weight % of amorphous nylon and 0 and 95 weight % semicrystalline polyamide 6 having a weight between 10 and 30 g/m² adjacent to layer (b).

2. The packaging material of claim 1 wherein the ethylene copolymer of layer (b) is ethylene vinyl acetate, ethylene-ethyl acrylate, ethylene-methyl acrylate or ethylene butyl acrylate.

3. The packaging material of claim 1 wherein the ethylene copolymer of layer (b) is an ethylene-acid copolymer or its corresponding ionomer.

4. The packaging material of claim 1 wherein the grafted ethylene copolymer of layer (b) is a maleic anhydride grafted ethylene copolymer.

5. The packaging material of any one of claims 1 to 4 wherein layer (b) further comprises up to 40 weight % of a copolyether ester, a copolyether amide or a polyurethane thermoplastic.

6. The packaging material of any one of claims 1 to 5 which is produced by coextrusion coating layers (b) and (c) onto layer (a).

7. The packaging material of any one of claims 1 to 5 which is produced by lamination of extruded or coextruded layers (b) and (c) onto layer (a).

## Patentansprüche

1. Flexibles oder halbflexibles Verpackungsmaterial mit einer Sauerstoffsperrschicht mit 10 bis 100 cm³/m² Tag atm und einer Wasserdampfsperrschicht mit 100 bis 1000 cm³/m² Tag bei 38°C und 90% relativer Feuchtigkeit, wobei das Verpackungsmaterial aufweist:
(a) eine Papierschicht mit einem Flächengewicht von 20 bis 400 g/m²;
(b) eine an die Schicht (a) angrenzende Schicht aus Ethylen-Copolymer oder Ethylen-Pfropfcopolymer mit einem Flächengewicht von 1 bis 5 g/m²; und
(c) eine an die Schicht (b) angrenzende Nylonschicht mit 5 bis 100 Gew.-% amorphem Nylon und 0 bis 95 Gew.-% semikristallinem Polyamid 6 mit einem Flächengewicht von 10 bis 30 g/m².

2. Verpackungsmaterial nach Anspruch 1, wobei das Ethylen-Copolymer der Schicht (b) Ethylenvinylacetat, Ethylenethylacrylat, Ethylenmethylacrylat oder Ethylenbutylacrylat ist.

3. Verpackungsmaterial nach Anspruch 1, wobei das Ethylen-Copolymer der Schicht (b) ein Ethylen-Säure-Copolymer oder dessen entsprechendes Ionomer ist.

4. Verpackungsmaterial nach Anspruch 1, wobei das Ethylen-Pfropfcopolymer der Schicht (b) ein Maleinsäureanhydrid-Ethylen-Propfcopolymer ist.

5. Verpackungsmaterial nach einem der Ansprüche 1 bis 4, wobei die Schicht (b) ferner bis zu 40 Gew.-% eines Copolyetheresters, eines Copolyetheramids oder eines Polyurethan-Thermoplasts ist.

6. Verpackungsmaterial nach einem der Ansprüche 1 bis 5, das durch Coextrusionsbeschichtung der Schicht (a) mit Schichten (b) und (c) hergestellt wird.

7. Verpackungsmaterial nach einem der Ansprüche 1 bis 5, das durch Auflaminieren von extrudierten oder coextrudierten Schichten (b) und (c) auf die Schicht (a) hergestellt wird.

## Revendications

1. Matériau d'emballage flexible ou semi-flexible présentant une barrière à l'oxygène entre 10 et 100 cm³/m² jour atm et une barrière à la vapeur d'eau entre 100 et 1000 g/m² jour à 38°C et 90% d'humidité relative comprenant
(a) une couche de papier ayant un poids entre 20 et 400 g/m²
(b) une couche de copolymère d'éthylène ou de copolymère greffé d'éthylène ayant un poids entre 1 et 5 g/m², adjacente à la couche (a), et
(c) une couche de Nylon contenant entre 5 et 100% en poids de Nylon amorphe et 0 et 95% en poids de polyamide 6 semicristallin, ayant un poids entre 10 et 30 g/m², adjacente à la couche (b).

2. Matériau d'emballage selon la revendication 1, dans lequel le copolymère d'éthylène de la couche (b) et un copolymère d'acétate de vinyle et d'éthylène, d'acrylate d'éthyle et d'éthylène, d'acrylate de méthyle et d'éthylène, ou d'acrylate de butyle et d'éthylène.

3. Matériau d'emballage selon la revendication 1 dans lequel le copolymère d'éthylène de la couche (b) est un copolymère d'acide et d'éthylène ou son ionomère correspondant.

4. Matériau d'emballage selon la revendication 1, dans lequel le copolymère greffé d'éthylène de la couche (b) est un copolymère d'éthylène greffé avec de l'anhydride maléique.

5. Matériau d'emballage selon une quelconque des revendications 1 à 4, dans lequel la couche (b) comprend en outre jusqu'à 40% en poids d'un copolyéther ester, d'un copolyéthéramide ou d'un thermoplastique de polyuréthane.

6. Matériau d'emballage selon une quelconque des revendications 1 à 5 qui est produit par extrusion de couches de revêtement (b) et (c) sur la couche (a).

7. Matériau d'emballage selon une quelconque des revendications 1 à 5 qui est produit par stratification des couches (b) en (c) extrudées ou coextrudées sur la couche (a).
